# EUROPÄISCHE PATENTSCHRIFT

(11) **EP 0 839 675 B1**
(45) Veröffentlichungstag und Bekanntmachung des Hinweises auf die Patenterteilung: **19.12.2001**
(21) Anmeldenummer: 97118675.4
(22) Anmeldetag: 28.10.1997
(51) Int. Cl.: B60C 19/08, B60C 11/18

(54) **Fahrzeugluftreifen**
Vehicle tyre
Bandage pneumatique pour véhicule

(30) Priorität: 31.10.1996 DE 19643998
(43) Veröffentlichungstag der Anmeldung: 06.05.1998
(73) Patentinhaber: Continental Aktiengesellschaft, 30165 Hannover (DE)
(72) Erfinder: Flebbe, Werner, 31535 Neustadt (DE); Walezok, Mario, 30900 Wedemark (DE)

(56) Entgegenhaltungen:
- EP-A- 0 662 396
- EP-A- 0 681 931
- EP-A- 0 732 229
- US-A- 4 319 620
- US-A- 5 225 011

## Beschreibung

Die Erfindung betrifft Fahrzeugluftreifen mit einer Karkasse, die vom Zenitbereich des Reifens bis in die Wulstbereiche reicht, mit einem Laufstreifen aus zumindest einer ersten Elastomermischung mit üblichen Zusatzstoffen, die sich im Mittelbereich des Laufstreifens befindet, und mit einem zwischen Laufstreifen und Karkasse angeordnetem Gürtelpaket.

An Fahrzeugluftreifen werden die verschiedensten Anforderungen gestellt. So sollen sie z. B. einen geringen Abrieb, ein hervorragendes Naßrutschverhalten und einen geringen Rollwiderstand aufweisen. So sind Fahrzeugluftreifen bekannt, deren Laufstreifen Elastomermischungen aufweisen, die als Füllstoff Ruß enthalten. Diese Fahrzeugluftreifen weisen aber einen hohen Rollwiderstand auf, der einen erhöhten Kraftstoffverbrauch mit sich bringt. Um diesen Nachteil zu umgehen, wurden Fahrzeugluftreifen mit Laufstreifenmischungen entwickelt, die als Füllstoff Kieselsäure enthalten. Zwar weisen diese Fahrzeugluftreifen einen geringen Rollwiderstand auf, jedoch ist ihr Abriebsverhalten unter hohem Schlupf schlechter. Des weiteren trat das Problem auf, daß Kieselsäure enthaltende Laufstreifenmischungen geringe Ableitfähigkeiten besitzen.

Ein Reifen, der dem Oberbegriff des Anspruchs 1 entspricht, ist aus der EP-A-0 662 396 bekannt.

Die Aufgabe der hier vorliegenden Erfindung besteht darin, einen Fahrzeugluftreifen bereitzustellen, der einen geringen Rollwiderstand bei zumindest gleichbleibendem Naßrutschverhalten über der gesamten Profiltiefe aufweist und außerdem eine ausreichende Leitfähigkeit besitzt.

Gelöst wird diese Aufgabe erfindungsgemäß dadurch, daß der Laufstreifen zumindest in einem Schulterbereich, d. h. in einem Randbereich von maximal 15% der mit der Fahrbahn in Berührung kommenden Axialerstreckung des Laufstreifens bezogen auf den Neureifen von einer zweiten Elastomermischung mit 30-80 pphr Kieselsäure gebildet wird, die radial innen bis an das Gürtelpaket heranreicht und deren axiale Erstreckung von radial außen nach radial innen zunimmt.

Durch die Gestaltung des Schulterbereiches eines Laufstreifens mit einer im wesentlichen Kieselsäure enthaltenden Elastomermischung wird es möglich, den Rollwiderstand im Vergleich zu Ruß enthaltenden Laufstreifenmischungen, die sich im gesamten Laufflächenbereich befinden, drastisch zu senken. Es wurde überraschenderweise festgestellt, daß es nicht erforderlich ist, die gesamte, mit der Fahrbahn in Berührung kommende Fläche mit einer stark (> 30pphr) Kieselsäure enthaltenden Mischung auszustatten. Der Randbereich der mit der Fahrbahn in Berührung kommenden Fläche der beim Neureifen maximal bis 15 % der mit der Fahrbahn in Berührung kommenden Axialerstreckung des Laufstreifens einehmen soll, ist ausreichend, um den Rollwiderstand in erheblichem Maße zu senken. Da die erfindungsgemäße axiale Erstreckung der Kieselsäure enthaltenden Elastomermischung von radial außen nach radial innen zunimmt, wird sogar im Vergleich zu einem Reifen, dessen gesamte mit der Fahrbahn in Berührung kommende Fläche als Füllstoff nur Ruß enthält, ein besseres Naßrutschverhalten des Fahrzeugluftreifens mit abnehmendem Profil gewährleistet. Ein weiterer Vorteil dieser erfindungsgemäßen Laufstreifengestaltung besteht darin, daß im Gürtelbereich eine höhere Haltbarkeit erzielt wird als bei dem Einsatz von konventionellen Rußmischungen. Gegenüber Laufstreifenmischungen, deren gesamte mit der Fahrbahn in Berührung kommende Fläche aus einer stark Kieselsäure enthaltenden Gummimischung besteht, bringt die Erfindung den Vorteil, daß die Herstellungskosten gesenkt werden konnten, da der Anteil an stark Kieselsäure enthaltender Elastomermischung verringert wurde. Diese Mischungen sind im allgemeinen teuer, so daß ein nicht zu übersehender wirtschaftlicher Effekt durch die Erfindung erzielt werden konnte. Da der Mittelbereich der mit der Fahrbahn in Berührung kommenden Fläche weniger bzw. gar keine Kieselsäure enthält, wird das Problem der Leitfähigkeit, die stark Kieselsäure gefüllte Laufstreifenmischungen mit sich bringen, beseitigt.

Vorzugsweise verläuft die Grenzlinie zwischen der ersten und der zweiten Elastomermischung so, daß sie mit der Vertikalen einen Winkel bis zu 60° einschließt (bezogen auf den Laufstreifenquerschnitt). Dieser Winkel beeinflußt insbesondere das Naßrutschverhalten mit sinkender Profiltiefe. Bei kleinen Winkeln macht sich die gleichbleibende Naßrutschfestigkeit mit abnehmender Profiltiefe weniger bemerkbar. Jedoch weisen auch diese Reifen einen höheren Naßgriff auf als ein Reifen, dessen gesamter Laufstreifen herkömmlichen Ruß aufweist. Wenn der Winkel größer als 60° wird, nimmt der Anteil an Kieselsäure enthaltender Laufstreifenmischung mit zunehmender Profiltiefe sehr stark zu. Da Kieselsäure enthaltende Laufstreifenmischungen einen höheren Abrieb aufweisen als Ruß enthaltende Laufstreifenmischungen, sollte der Winkel zwischen der ersten und der zweiten Elastomermischung mit der Vertikalen vorzugsweise kleiner als 60° sein. Um ein ausgewogenes Verhältnis zwischen Abrieb, Rollwiderstand und Naßgriff zu erhalten, wird vorgeschlagen, die Grenzlinie zwischen der ersten und der zweiten Elastomermischung so verlaufen zu lassen, daß sie mit der Vertikalen einen Winkel von ca. 45° einschließt.

Vorzugsweise ist die Grenzlinie zwischen der ersten und der zweiten Elastomermischung im wesentlichen geradlinig. Das ermöglicht eine extrusionstechnisch günstige Herstellungsmethode des unvulkanisierten Laufstreifens.

Da die erwähnten vorteilhaften Eigenschaften des Laufstreifens massiv von dem Gehalt der Kieselsäure bestimmt werden, ist es vorteilhaft, daß die Kieselsäure in der zweiten Elastomermischung einen Anteil aufweist, der zwischen 60 und 75 pphr liegt. Dabei sollen Kieselsäuren zum Einsatz kommen, die aus dem Stand der Technik bekannt sind. Die Einheit pphr bezieht sich dabei auf die gesamte eingesetzte Kautschukmasse. Als Elastomermischungen können z. B. mit Schwefel vulkanisierbare Kautschukmischungen verwendet werden, die Naturkautschuk, synthetisches Polyisopren, Polybutadien, Acrylnitril-Butadien-Copolymer, Styren-Butadien-Copolymer und/oder Mischungen hieraus enthalten. Prinzipiell sind aber auch andere aus dem Stand der Technik bekannte Kautschukmaterialien einsetzbar. Die Elastomermischungen enthalten übliche Zusatzstoffe, wie z. B. Vulkanisationsbeschleuniger, Alterungsschutzmittel, Weichmacher, Schwefelspender und Füllstoffe.

Der Aufbau des Laufstreifens kann so gestaltet sein, daß der gesamte Laufstreifen im Mittelbereich (das heißt, die gesamte mit der Fahrbahn in Berührung kommende Fläche abzüglich zumindest eines erfindungsgemäßen Randbereiches) bis zum Gürtelpaket von ein und derselben z. B. als Füllstoff im wesentlichen Ruß enthaltenden Elastomermischung eingenommen wird. Diese Variante hat den Vorteil, daß die Extrusion des erfindungsgemäßen Laufstreifens verfahrenstechnisch einfach ist. Prinzipiell ist es aber auch möglich, daß der Mittelbereich des Laufstreifens aus mehreren Elastomermischungen besteht. So z. B. wäre eine radiale Teilung des Laufstreifens in Cap und Base vorstellbar. Denkbar wäre auch eine axiale Aufteilung des Laufstreifens im Mittelbereich.

Der erfindungsgemäße Laufstreifenaufbau kann für Fahrzeugluftreifen verschiedener Arten Verwendung finden, wie z. B. für PKWs oder LKWs. Vorteilhafterweise sollen aber Fahrzeugluftreifen für Transportfahrzeuge mit den erfindungsgemäßen Laufstreifen ausgestattet werden. Da bei Fahrzeugluftreifen für Transportfahrzeuge ein dicker Laufstreifen verwendet werden muß, konnten die Kosten durch den erfindungsgemäßen Laufstreifenaufbau im Vergleich zu einem Laufstreifen, der aus nur einer Kieselsäure enthaltenden Laufstreifenmischung besteht, erheblich gesenkt werden. Auch konnten Vorteile im Abrieb erzielt werden. Des weiteren besitzen diese Reifen eine ausreichende Ableitfähigkeit. Im Vergleich zu reinen Ruß enthaltenden Laufstreifenmischungen, die sich über die gesamte mit der Fahrbahn in Berührung kommende Fläche erstrecken, konnte der Rollwiderstand und das Naßrutschverhalten verbessert werden.

Ein Ausführungsbeispiel soll anhand einer schematischen Zeichnung näher erläutert werden:

Es zeigt:
- Figur 1: einen radialen Schnitt durch einen Fahrzeugluftreifen mit einem erfindungsgemäßen Laufstreifenaufbau, wobei der Mittelbereich des Laufstreifens aus einer einzigen Elastomermischung gebildet ist.
- Figur 2: einen radialen Schnitt durch einen Fahrzeugluftreifen mit einem erfindungsgemäßen Laufstreifenaufbau, wobei der Mittelbereich des Laufstreifens aus zwei verschiedenen Elastomermischungen aufgebaut ist.

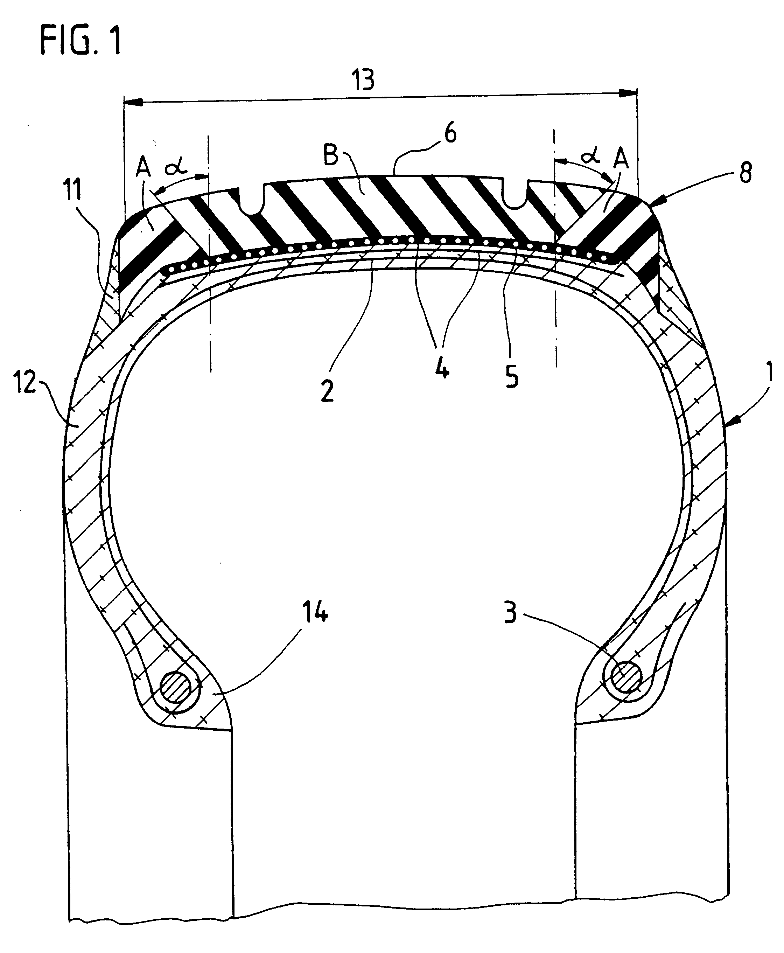

In der Figur 1 ist ein Fahrzeugluftreifen 1 für Transportfahrzeuge mit einer Karkasse 2, die um die Wulstkerne 3 geschlagen ist und radial über der Karkasse 2 angeordneten gummierten Gürtel 4, der aus Festigkeitsträgern 5 aufgebaut ist, dargestellt. Über dem Gürtel 4 befindet sich ein Laufstreifen 8, der im Schulterbereich die Elastomermischung A aufweist, die ca. 70 pphr Kieselsäure enthält. Der Bereich A des Laufstreifens nimmt in radialer Richtung den Randbereich der mit der Fahrbahn in Berührung kommenden Fläche 13 bis hin zum Gürtel 4 ein. Prinzipiell ist es natürlich auch möglich, daß sich der Bereich A bis zu einer nicht dargestellten Bandage erstreckt. Der in der Anmeldung verwendete Begriff "Gürtelpaket" soll die Bandage und/oder den Gürtel umfassen. Der Bereich A steht in unmittelbarem Kontakt mit dem Wing 11 (Flügel). An den erfindungsgemäßen Randbereich, der mit einer Elastomermischung der Zusammensetzung A ausgefüllt ist, schließt sich in axialer Erstreckung des Laufstreifens der Mittelbereich mit der Kautschukmischung B an. Der Mittelbereich soll sich in der Figur 1 plus/minus 40 % der mit der Fahrbahn in Berührung kommenden Fläche 13 um den Zenit 6 in axialer Richtung erstrecken. Für den erfindungsgemäßen Bereich A verbleiben in beiden Schulterbereichen jeweils 10 % der mit der Fahrbahn in Berührung kommenden Fläche 13. Wenn beide Schulterbereiche mit der Elastomermischung A ausgestattet sind, machen sich die erfindungsgemäßen Vorteile natürlich noch deutlicher sichtbar. Der Winkel zwischen den beiden Elastomermischungen A und B soll ca. 45° betragen. Aus der Figur 1 ist ersichtlich, daß sich die Elastomermischung A mit einem geringen Anteil auch außerhalb der mit der Fahrbahn in Berührung kommenden Fläche 13 befinden kann. Dies soll durch den Begriff "Randbereich, der mit der Fahrbahn in Berührung kommenden Fläche" mit erfaßt sein.

In der folgenden Tabelle sind Kautschukzusammensetzungen der Bereiche A und B angegeben. Die Einheit pphr bezieht sich auf den Gesamtkautschukanteil. Die Mischung A weist einen hervorragenden Naßgriff und einen geringen Rollwiderstand auf und die Mischung B ist kostengünstiger und besitzt eine höhere Laufleistung bei hohen Beanspruchungen (Schlupf).

| **Bestandteil:** | **Zusammensetzung [pphr]** | |
|---|---|---|
| | **Mischung A** | **Mischung B** |
| Naturkautschuk (NR) | 10 | 10 |
| Lös. Styren-Butadien | | |
| Kautschuk (SSBR) | 60 | - |
| Emulsion Styren-Butadien- | | |
| Kautschuk (ESBR) | - | 65 |
| Butadienkautschuk (BR) | 30 | 25 |
| gefällte Kieselsäure | 70 | - |
| Aktivruß | 10 | 80 |
| Weichmacheröl | 20 | 30 |
| Alterungsschutzmittel | 3 | 3 |
| Silankupplungsagenz | 10 | - |
| Zinkweiß | 3 | 3 |
| Stearinsäure | 3 | 2 |
| Schwefel | 1,8 | 2 |
| Beschleuniger (Sulfenamid) | 2,5 | 1,8 |

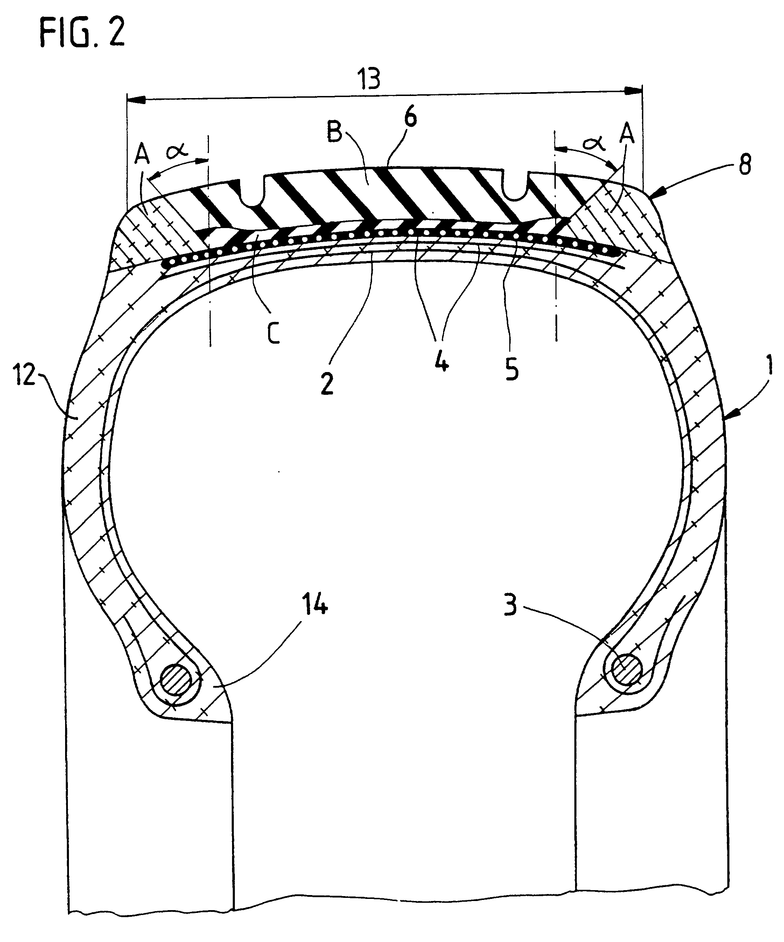

Die Figur 2 unterscheidet sich von der Figur 1 dahingehend, daß der Mittelbereich der mit der Fahrbahn in Berührung kommenden Fläche 13 in radialer Richtung zweigeteilt ist. So weist der Mittelbereich des Laufstreifens 8 die Elastomermischungen B und C auf, wobei die Elastomermischung B ca. 65 % der gesamten Laufstreifendicke im Mittelbereich einnimmmt. Ein so aufgebauter Laufstreifen im Mittelbereich kann zusätzlich hinsichtlich einer Optimierung des Rollwiderstandes ausgelegt sein. Ein weiterer Unterschied zur Figur 1 besteht darin, daß die Elastomermischung A direkt an die Mischung der Seitenwand 12 grenzt. Der erfindungsgemäße Laufstreifenaufbau ist also unabhängig von dem prinzipiellen Aufbau des Fahrzeugluftreifens.

Es wird erfindungsgemäß eine Optimierung von Fahrzeugluftreifen erreicht, die einen verbesserten Rollwiderstand bei relativ zum Rußreifen besseren, mit Abrieb relativ zunehmendem Naßrutschverhalten erhalten. Gleichzeitig können die Herstellungskosten gesenkt werden.

## Patentansprüche

1. Fahrzeugluftreifen (1) mit einer Karkasse (2), die vom Zenitbereich (6) des Reifens bis in die Wulstbereiche reicht, mit einem Laufstreifen (8) aus zumindest einer ersten Elastomermischung (B) mit üblichen Zusatzstoffen, die sich im Mittelbereich des Laufstreifens (8) befindet, und einer zweiten Elastomermischung (A) zumindest in einem Schulterbereich, d. h. im Randbereich von maximal 15 % der mit der Fahrbahn in Berührung kommenden Axialerstreckung des Laufstreifens (8) bezogen auf den Neureifen, die radial innen bis an ein zwischen Laufstreifen (8) und Karkasse (2) angeordnetes Gürtelpaket (4) heranreicht,
**dadurch gekennzeichnet, daß** zumindest in einem Schulterbereich die axiale Erstreckung der Elastomermischung (A) von radial außen nach radial innen zunimmt und die Elastomermischung (A) 30 bis 80 pphr Kieselsäure enthält.

2. Fahrzeugluftreifen (1) nach Anspruch 1, **dadurch gekennzeichnet, daß** im Laufstreifenquerschnitt die Grenzlinie zwischen der ersten Elastomermischung (B) und der zweiten Elastomermischung (A) mit der Vertikalen einen Winkel bis zu 60° einschließt.

3. Fahrzeugluftreifen (1) nach Anspruch 2, **dadurch gekennzeichnet, daß** im Laufstreifenquerschnitt die Grenzlinie zwischen der ersten Elastomermischung (B) und der zweiten Elastomermischung (A) mit der Vertikalen einen Winkel von ca. 45° einschließt.

4. Fahrzeugluftreifen (1) nach zumindest einem der vorhergehenden Ansprüche, **dadurch gekennzeichnet, daß** die Grenzlinie zwischen der ersten Elastomermischung (B) und der zweiten Elastomermischung (A) im wesentlichen geradlinig verläuft.

5. Fahrzeugluftreifen (1) nach zumindest einem der vorhergehenden Ansprüche, **dadurch gekennzeichnet, daß** der Kieselsäureanteil der zweiten Elastomermischung (A) zwischen 60 und 75 pphr liegt.

6. Fahrzeugluftreifen (1) nach zumindest einem der vorhergehenden Ansprüche, **dadurch gekennzeichnet, daß** der Laufstreifen (8) in beiden Schulterbereichen von einer zweiten Elastomermischung (A) mit 30 - 80 pphr Kieselsäure gebildet wird, die radial innen bis an das Gürtelpaket (4) heranreicht und deren axiale Erstreckung von radial außen nach radial innen zunimmt.

7. Fahrzeugluftreifen (1) nach zumindest einem der vorhergehenden Ansprüche, **dadurch gekennzeichnet, daß** die erste Elastomermischung (B) im Mittelbereich des Laufstreifens (8) von der mit der Fahrbahn in Berührung kommenden Fläche (13) bis nach radial innen zum Gürtelpaket heranreicht.

## Claims

1. Pneumatic vehicle tyre (1), having a carcase (2) which extends from the crown region (6) of the tyre to the bead regions, a tread strip (8) formed from at least one first elastomeric mixture (B) with conventional additives, which mixture is situated in the central region of the tread strip (8), and a second elastomeric mixture (A) at least in one shoulder region, i.e. in the edge region of a maximum of 15 % of the axial extension, which comes into contact with the roadway, of the tread strip (8) relative to the new tyre, which extension extends radially internally to a belt bundle (4) disposed between tread strip (8) and carcase (2), **characterised in that**, at least in one shoulder region, the axial extension of the elastomeric mixture (A) increases radially inwardly from radially externally, and the elastomeric mixture (A) contains 30 to 80 pphr silica.

2. Pneumatic vehicle tyre (1) according to claim 1, **characterised in that**, in the tread strip cross-section, the boundary line between the first elastomeric mixture (B) and the second elastomeric mixture (A) forms an angle up to 60° with the vertical.

3. Pneumatic vehicle tyre (1) according to claim 2, **characterised in that**, in the tread strip cross-section, the boundary line between the first elastomeric mixture (B) and the second elastomeric mixture (A) forms an angle of approx. 45° with the vertical.

4. Pneumatic vehicle tyre (1) according to at least one of the preceding claims, **characterised in that** the boundary line between the first elastomeric mixture (B) and the second elastomeric mixture (A) extends substantially rectilinearly.

5. Pneumatic vehicle tyre (1) according to at least one of the preceding claims, **characterised in that** the proportion of silica in the second elastomeric mixture (A) lies between 60 and 75 pphr.

6. Pneumatic vehicle tyre (1) according to at least one of the preceding claims, **characterised in that** the tread strip (8) in both shoulder regions is formed by a second elastomeric mixture (A) with 30 - 80 pphr silica, which mixture extends radially internally to the belt bundle (4), and the axial extension of which mixture increases radially inwardly from radially externally.

7. Pneumatic vehicle tyre (1) according to at least one of the preceding claims, **characterised in that** the first elastomeric mixture (B) in the central region of the tread strip (8) extends from the surface (13), which comes into contact with the roadway, radially inwardly to the belt bundle.

## Revendications

1. Pneumatique (1) pour véhicule comportant une carcasse (2), qui s'étend depuis la partie sommitale (6) du pneumatique jusque dans la zone des talons, comportant une bande de roulement (8) constituée par au moins un premier mélange élastomère (B) contenant des additifs usuels et qui est situé dans la partie médiane de la bande de roulement (8) et un second mélange élastomère (A) situé au moins dans une partie d'épaulement, c'est-à-dire dans la partie marginale s'étendant au maximum sur 15 % de l'étendue qui vient en contact avec la chaussée, de la bande de roulement (8) par rapport au pneumatique neuf et qui s'étend radialement vers l'intérieur jusqu'à proximité d'un paquet de nappes d'armature (4) disposé entre la bande de roulement (8) et la carcasse (2), **caractérisé en ce qu'**au moins dans une partie d'épauiement, l'étendue axiale du mélange élastomère (A) augmente de l'extérieur, radialement, vers l'intérieur, radialement, et que le mélange élastomère (A) contient entre 30 et 80 pphr d'acide silicique.

2. Pneumatique (1) pour véhicule selon la revendication 1, **caractérisé en ce que** dans la section transversale de la bande de roulement, la ligne limite entre le premier mélange élastomère (B) et le second mélange élastomère (A) fait avec la verticale un angle atteignant jusqu'à 60°.

3. Pneumatique (1) pour véhicule selon la revendication 2, **caractérisé en ce que** dans la section transversale de la bande de roulement, la ligne limite entre le premier mélange élastomère (B) et le second mélange élastomère (A) fait avec la verticale un angle d'environ 45°.

4. Pneumatique (1) pour véhicule selon au moins l'une des revendications précédentes, **caractérisé en ce que** la ligne limite entre le premier mélange élastomère (B) et le second mélange élastomère (A) s'étend essentiellement avec une forme rectiligne.

5. Pneumatique (1) pour véhicule selon au moins l'une des revendications précédentes, **caractérisé en ce que** le pourcentage d'acide silicique du second mélange élastomère (A) est compris entre 60 et 75 pphr.

6. Pneumatique (1) pour véhicule selon au moins l'une des revendications précédentes, **caractérisé en ce que** la bande de roulement (8) est fonmée, dans les deux zones d'épaulement, par un second mélange élastomère (A) comportant 30-80 pphr d'acide silicique, qui s'étend radialement vers l'intérieur jusqu'au niveau du paquet de nappes d'armature (4) et dont l'étendue axiale augmente de l'extérieur, radialement, vers l'intérieur, radialement.

7. Pneumatique (1) pour véhicule selon au moins l'une des revendications précédentes, **caractérisé en ce que** le premier mélange élastomère (B) s'étend dans la zone médiane de la bande de roulement (8) depuis la surface (13) qui vient en contact avec la chaussée, vers l'intérieur, radialement, jusqu'au paquet de nappes d'armature.
